# EUROPÄISCHE PATENTSCHRIFT

(11) **EP 2 223 144 B1**
(45) Veröffentlichungstag und Bekanntmachung des Hinweises auf die Patenterteilung: **02.04.2014**
(21) Anmeldenummer: 08861595.0
(22) Anmeldetag: 17.12.2008
(51) Int. Cl.: G01S 3/783, G01S 3/781

(54) **STRAHLUNGSSENSOR ZUM ERFASSEN DER POSITION UND INTENSITÄT EINER STRAHLUNGSQUELLE**
RADIATION SENSOR FOR DETECTING THE POSITION AND INTENSITY OF A RADIATION SOURCE
CAPTEUR DE RAYONNEMENT CONÇU POUR DÉTECTER LA POSITION ET L'INTENSITÉ D'UNE SOURCE DE RAYONNEMENT

(30) Priorität: 18.12.2007 DE 102007060835
(43) Veröffentlichungstag der Anmeldung: 01.09.2010
(60) Teilanmeldung: 13168326.0
(73) Patentinhaber: Epcos AG, 81669 München (DE)
(72) Erfinder: BOHL, Benjamin, 10999 Berlin (DE)
(74) Vertreter: Epping - Hermann - Fischer
(86) Internationale Anmeldenummer: PCT/DE2008/002124
(87) Internationale Veröffentlichungsnummer: WO 2009/076944

(56) Entgegenhaltungen:
- EP-B1- 0 350 866
- GB-A- 2 061 548
- US-A- 3 838 277
- US-A- 5 877 490
- US-B1- 6 201 628

## Beschreibung

Aus der Druckschrift EP 0350866 Bl ist ein Lichtsensor bekannt, bei dem zwischen einem Fotodetektor und einem Lichtmodulator ein Lichtdiffusor zum diffusen Ausbreiten des auf dem Sensor einfallenden Lichts angeordnet ist.

Aus der Druckschrift US 5,877,490 A ist ein Quadranten-Lichtdetektor bekannt, bei dem eine halbkugelförmige Vertiefung mit einem diffus reflektierenden Material ausgekleidet ist und bei dem Photodioden oberhalb der Vertiefung angeordnet sind.

Es ist Aufgabe der vorliegenden Erfindung, einen Strahlungssensor anzugeben, dessen Ausgangssignal in Abhängigkeit von der Position der Strahlungsquelle besonders gut eingestellt werden kann.

Die Aufgabe wird durch einen Strahlungssensor nach Patentanspruch 1 gelöst. Vorteilhafte Ausgestaltungen des Strahlungssensors sind Gegenstand von Unteransprüchen.

Es wird ein Strahlungssensor zum Erfassen der Position und Intensität einer Strahlungsquelle angegeben, der wenigstens einen Fotodetektor aufweist, wobei eine strahlungsempfindliche Oberfläche des Fotodetektors bezüglich des Horizonts des Strahlungssensors annähernd senkrecht angeordnet sind. Es ist jedoch auch möglich, dass der Fotodetektor eine Einbaulage aufweist, die von der Senkrechten abweicht. Der Fotodetektor ist bezüglich des Horizonts des Strahlungssensors vorzugsweise derart angeordnet, dass zumindest ein Teil des von der Strahlungsquelle emittierten Lichts aus bestimmten Richtungen über den Reflektor auf die strahlungsempfindliche Oberfläche des Fotodetektors gelangt.

Die Position der Strahlungsquelle wird in Bezug zum Horizont des Strahlungssensors ermittelt. Der Horizont ist als Hauptebene des Strahlungssensors definiert, wobei die Winkel gegeben durch Azimut und Elevationswinkel in Bezug auf den Horizont des Strahlungssensors festgelegt sind. Für den Fall, dass die Strahlungsquelle senkrecht über dem Horizont steht und der Fotodetektor senkrecht angeordnet ist, fällt somit die Strahlung nicht direkt auf eine strahlungsempfindliche Oberfläche des Fotodetektors des Strahlungssensors.

Der Strahlungssensor weist einen Reflektor auf, der unter bestimmten Einstrahlwinkeln die von der Strahlungsquelle emittierte Strahlung zumindest teilweise in Richtung der strahlungsempfindlichen Oberfläche des Fotodetektors reflektiert. Der Reflektor weist vorzugsweise eine Form auf, die annähernd der einer Wanne entspricht. Es ist jedoch auch möglich, dass der Reflektor jede beliebige Form aufweist, die geeignet ist, die einfallende Strahlung aus bestimmten Richtungen auf den Fotodetektor zu reflektieren. Die Wände des Reflektors können sowohl eine gekrümmte als auch eine ebene Oberfläche aufweisen. Der Reflektor kann jede beliebige Form aufweisen, die dazu geeignet ist, dass das von des Strahlungsquelle emittierte Licht mittels Reflektion auf die strahlungsempfindliche Oberfläche des Fotodetektors gelangt. Der Fotodetektor ist zumindest teilweise innerhalb des vom Reflektor bestimmten Innenraumes angeordnet.

In einer weiteren Ausführungsform kann der Fotodetektor jedoch auch vollständig oberhalb des Reflektors angeordnet sein. Der Strahlungssensor weist eine erste Seite auf, durch die die Strahlung auf den Strahlungssensor fällt. Auf einer zweiten Seite des Strahlungssensors, die von der Strahlungsquelle abgewandt ist, ist vorzugsweise ein Reflektor angeordnet, der die von der Strahlungsquelle emittierte Strahlung zumindest teilweise in Richtung des Fotodetektors reflektiert. Der Reflektor ist vorzugsweise auf der von der Lichteinfallsseite abgewandten Seite des Strahlungssensors angeordnet.

Bei der Strahlungsquelle handelt es sich bevorzugt um die Sonne, deren Position gegeben durch Azimut und Elevationswinkel und deren Intensität bezüglich des Strahlungssensors ermittelt werden soll. Der Strahlungssensor ist insbesondere auch dazu geeignet, Infrarotstrahlung der Strahlungsquelle zu detektieren. Bei der von der Strahlungsquelle ausgesandten Strahlung kann es sich somit sowohl um Strahlung mit einer Wellenlänge im infraroten Spektralbereich handeln als auch um Licht aus dem sichtbaren Spektralbereich.

Des Weiteren ist der Strahlungssensor in einer bevorzugten Ausführungsform mit einer Abdeckkappe versehen. Die Abdeckkappe ist vorzugsweise für bestimmte Wellenlängen der von der Strahlungsquelle emittierten Strahlung undurchlässig.

In einer bevorzugten Ausführungsform weist die Abdeckkappe ein Material auf, das Strahlung im Infrarotbereich durch die Abdeckkappe durchlässt, sichtbare Strahlung wird jedoch vorzugsweise größtenteils durch die Abdeckkappe von den Fotodetektoren abgehalten.

Bedingt durch das Material der Abdeckkappe wird die von der Strahlungsquelle emittierte Strahlung an der Abdeckkappe zumindest teilweise durch Lichtbrechung beeinflusst. Durch den Phasenübergang von Luft zu der Abdeckkappe findet an der Grenze eine Brechung der Strahlung statt.

In einer bevorzugten Ausführungsform ist der Reflektor als ein Teil eines Innenteils oder als Innenseite des Gehäuses des Strahlungssensors ausgebildet.

In einer bevorzugten Ausführungsform ist eine Halterung für die Fotodetektoren als ein Teil eines Innenteils des Gehäuses des Strahlungssensors ausgebildet. Bevorzugt besteht zumindest ein Teil eines Innenteils des Gehäuses aus Reflektor und Halterung für die Fotodetektoren.

Bevorzugt beeinflusst die Form und das Material und/oder die Oberflächenbeschaffenheit des Reflektors das von den Fotodetektoren zur Erfassung der Intensität und Position der Strahlungsquelle ausgegebene Signal.

Des Weiteren wird das Signal der Fotodetektoren zur Erfassung der Intensität und Position einer Strahlungsquelle ebenfalls von dem Abstand des Reflektors zu den strahlungsempfindlichen Oberflächen der Fotodetektoren beeinflusst. Insbesondere der vertikal zum Horizont des Strahlungssensors bestehende Abstand zwischen dem Reflektor und der strahlungsempfindlichen Oberfläche der Fotodetektoren spielt hierbei eine nicht zu vernachlässigende Rolle.

In einer bevorzugten Ausführungsform weisen die Fotodetektoren eine oder mehrere Vorrichtungen auf, die dazu dienen, die auf die strahlungsempfindliche Oberfläche der Fotodetektoren einfallende Strahlungsmenge durch Abschatten zu beeinflussen.

In einer bevorzugten Ausführungsform dienen Bau- oder Gehäuseteile innerhalb des Strahlungssensors zum Abschatten der strahlungsempfindlichen Oberfläche der Fotodetektoren vor einfallender Strahlung oder zumindest zum teilweise Abschatten der Fotodetektoren.

In einer weiteren Ausführungsform ist auf die strahlungsempfindliche Oberfläche der Fotodetektoren eine Schicht aufgebracht, die die auf die Fotodetektoren einfallende Strahlung zumindest teilweise absorbiert, wodurch die Strahlungsmenge beeinflusst wird, die auf die strahlungsempfindliche Oberfläche der Fotodetektoren trifft.

In einer bevorzugten Ausführungsform ist die absorbierende Schicht nicht direkt auf der strahlungsempfindlichen Oberfläche aufgebracht, sondern auf dem Gehäuse des Fotodetektors. Die absorbierende Schicht ist in dieser Ausführungsform mit einem gewissen Abstand zu der strahlungsempfindlichen Oberfläche des Fotodetektors angeordnet.

In einer bevorzugten Ausführungsform ist die Vorrichtung zur Abschattung der Fotodetektoren von direkter oder indirekter Strahlung, also auch von der Strahlungsquelle emittierten Strahlung, die über den Reflektor auf die strahlungsempfindliche Oberfläche der Fotodetektoren trifft, derart angeordnet, dass die Fotodetektoren wenigstens aus einer bestimmten Richtung gegeben durch Azimut und Elevationswinkel vor einfallender Strahlung geschützt sind.

Die oben beschriebenen Gegenstände werden anhand der folgenden Figuren und Ausführungsbeispielen näher erläutert.

Die nachfolgend beschriebenen Zeichnungen sind nicht als maßstabsgetreu aufzufassen. Vielmehr können zur besseren Darstellung einzelne Dimensionen vergrößert, verkleinert oder auch verzerrt dargestellt sein. Elemente die einander gleichen oder die die gleiche Funktion übernehmen sind mit den gleichen Bezugszeichen bezeichnet.
- Figur 1: zeigt eine erste Ausführungsform des Strahlungssensors in einer dreidimensionalen Ansicht.
- Figur 2: zeigt eine Ausführungsform des Strahlungssensors in einer dreidimensionalen Ansicht gemäß Figur 1, die um etwa 45° gegen den Uhrzeigersinn gedreht ist.
- Figur 3: zeigt eine Ansicht eines Strahlungssensors von oben.
- Figur 4: zeigt eine Ausführungsform des Strahlungssensors, bei der der Strahlungssensor mit einer Abdeckkappe versehen ist.
- Figur 5: zeigt einen Querschnitt des Strahlungssensors aus Figur 4, entlang der Schnittlinie A - A.
- Figur 6: zeigt einen Querschnitt eines Strahlungssensors aus Figur 4, entlang der Schnittlinie B - B.
- Figur 7: zeigt beispielhaft die Abhängigkeit der Ausgangssignale der Fotodetektoren vom Elevationswinkel der jeweils auf die beiden Fotodetektoren treffende Strahlung, bei einem Azimutwinkel von -90°.
- Figur 8: zeigt beispielhaft die Abhängigkeit der addierten Ausgangssignale der Fotodetektoren vom Elevationswinkel der auf die beiden Fotodetektoren treffende Strahlung.
- Figur 9: zeigt beispielhaft die Abhängigkeit der Ausgangssignale der Fotodetektoren vom Elevationswinkel der jeweils auf die beiden Fotodetektoren treffende Strahlung, bei einem Azimutwinkel von 0°.

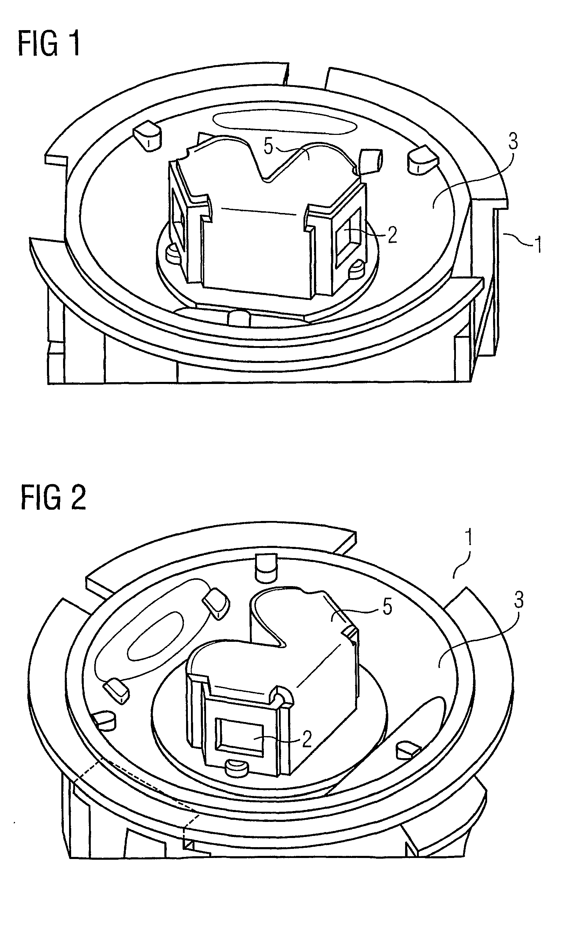

In Figur 1 ist eine erste Ausführungsform eines Strahlungssensors 1 in einer dreidimensionale Ansicht gezeigt. Vorzugsweise in dem zentralen Bereich eines Reflektors 3 befindet sich eine Halterung 5 für wenigstens einen Fotodetektor 2. In der Figur 1 sind an der Halterung 5 zwei Fotodetektoren 2 angeordnet. Der Reflektor 3 ist im Bereich um die Halterung 5 für die Fotodetektoren 2 herum in der Figur 1 zumindest teilweise gekrümmt, der Reflektor kann jedoch auch vollständig gerade ausgebildet sein. Der Reflektor 3 dient dazu, die von einer Strahlungsquelle emittierte Strahlung, zumindest teilweise auf die strahlungsempfindliche Oberfläche der Fotodetektoren 2 zu reflektieren.

Die strahlungsempfindlichen Oberflächen der Fotodetektoren 2 sind bezüglich eines Horizonts, der parallel zum oberen Rand des Reflektors 3 verläuft, senkrecht angeordnet. Die von der Strahlungsquelle emittierte Strahlung trifft bei einem Einfallswinkel von 90° zum Horizont des Strahlungssensors 1 dadurch vorzugsweise nicht direkt auf die Fotodetektoren 2, sondern wird über Lichtreflexion am Reflektor 3 auf die Fotodetektoren 2 geleitet. Bei einem Einfallswinkel der Strahlung, der von der Orthogonalen des Einfallswinkels gegenüber dem Horizont des Strahlungssensors 1 abweicht, trifft die Strahlung zumindest teilweise direkt auf einen der beiden Fotodetektoren 2. Je nach Ausführungsform ist es jedoch auch möglich, dass die Strahlung zumindest teilweise direkt auf beide Fotodetektoren 2 trifft. Je flacher der Einfallswinkel ist, desto mehr Strahlung trifft direkt auf die Fotodetektoren 2. Die Strahlung, die über Reflexion am Reflektor 3 auf die strahlungsempfindlichen Oberflächen der Fotodetektoren 2 trifft, hat somit bei steilen Einfallswinkeln einen höheren Anteil, als bei einem flachen Einfallswinkel. Es ist jedoch auch möglich, dass die Strahlung unter einem Winkel auf den Strahlungssensor einfällt, bei dem keine Strahlung auf die strahlungsempfindliche Oberfläche der Fotodetektoren trifft.

Die Fotodetektoren 2 sind mit ihrer strahlungsempfindlichen Oberfläche, vorzugsweise in zwei unterschiedliche Richtungen, senkrecht zum Horizont des Strahlungssensors 1 ausgerichtet. Es ist jedoch auch möglich, dass die Detektoren in einem Winkel zueinander angeordnet sind, der zwischen 0° und 360° liegt. Durch eine Auswertung der Signale der beiden Fotodetektoren 2 ist somit eine Erfassung der Position, bestimmt durch den Azimutwinkel und den Elevationswinkel, und Intensität einer Strahlungsquelle möglich.

Die Figur 2 zeigt eine dreidimensionale Ansicht eines um ungefähr 45° gegen den Uhrzeigersinn gedrehten Strahlungssensors 1 gemäß Figur 1. Vorzugsweise in der Mitte des Reflektors 3 befindet sich eine Halterung 5 für zwei Fotodetektoren 2, die bezüglich des Horizonts des Strahlungssensors 1 senkrecht zu diesem angeordnet sind. Bei senkrecht auf den Strahlungssensor 1 einfallender Strahlung wird die Strahlung vorzugsweise nur über den Reflektor 3 auf die Fotodetektoren 2 geleitet. Bei einem flacheren Einfallswinkel der Strahlung auf die Fotodetektoren 2, wird die Strahlung zum Teil direkt von den Fotodetektoren 2 detektiert, als auch zum Teil indirekt über den Reflektor 3. Der Reflektor 3 weist vorzugsweise im Bereich, der den strahlungsempfindlichen Flächen der Fotodetektoren 2 gegenüber liegt eine gleichmäßige Krümmung auf. Somit weist der Strahlungssensor 1 wenigstens zwei Vorzugsrichtungen auf, bei denen die Fotodetektoren 2 ein möglichst hohes Signal ausgeben. Der Strahlungssensor 1 ist somit bei der gezeigten Ausführungsform mit zwei Fotodetektoren 2 vorzugsweise achsensymmetrisch. Die Symmetrieachse verläuft hierbei vorzugsweise mittig zwischen den beiden Fotodetektoren 2 durch den Strahlungssensor 1. Durch diese in Figur 2 gezeigte Anordnung, bei der die lichtempfindlichen Oberflächen der Fotodetektoren 2 in einem Winkel α von etwa 45° zueinander angeordnet sind, ist es beispielsweise möglich, dass falls die Sonne von links in ein Auto scheint, die Fahrerseite durch eine Klimaanlage gekühlt wird. Scheint die Sonne spiegelsymmetrisch von rechts in das Auto, so wird beispielsweise die Beifahrerseite gekühlt.

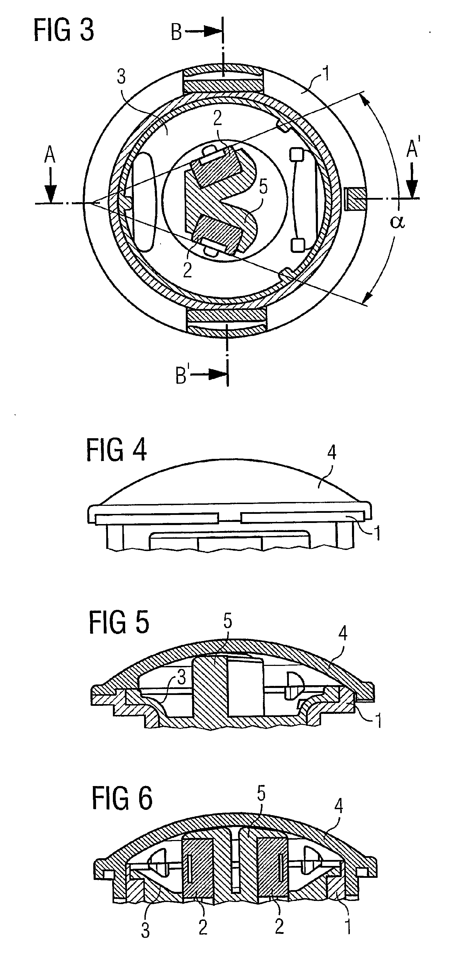

In Figur 3 ist der Strahlungssensor 1 in einer Draufsicht gezeigt. Der Strahlungssensor 1 weist in der gezeigten Ausführungsform zwei Fotodetektoren 2 vorzugsweise Achsensymmetrisch zu der Schnittlinie A - A' auf. Die strahlungsempfindlichen Oberflächen der Fotodetektoren 2 sind vorzugsweise in einem Winkel α zueinander angeordnet. Der Winkel α weist eine Wert im Bereich von 0° - 360° auf. In einer bevorzugten Ausführungsform, wie in Figur 3 dargestellt, weist der Winkel α zwischen den beiden Fotodetektoren 2 einen Wert von 45° auf. Durch diese Anordnung der beiden Fotodetektoren 2 zueinander, ist es möglich, dass der Strahlungssensor 1 eine bestimmte Einbaurichtung hinsichtlich der späteren Verwendung, z.B. für die Steuerung einer Klimaanlage in einem Kraftfahrzeug, aufweist.

In Figur 4 ist eine Seitenansicht eines Strahlungssensors 1 dargestellt, bei der der Strahlungssensor 1 mit einer Abdeckkappe 4 versehen ist. Die Abdeckkappe 4 schützt die im Inneren des Strahlungssensors 1 angeordneten Fotodetektoren 2, die in dieser Ansicht nicht dargestellt sind, vor Beschädigung. Des weiteren dient die Abdeckkappe auch dazu, dass die Anordnung im Inneren vor dem Betrachter verborgen bleibt. Dies erleichtert die Anpassung des Strahlungssensors an seine Umgebung, z.B. im Armaturenbrett eines Autos. Des weiteren dient die Abdeckkappe 4 dazu, die von einer Strahlungsquelle emittierte Strahlung mit einer bestimmten Wellenlänge durchzulassen, die innerhalb eines bestimmten Bereichs liegt. Bevorzugt ist die Abdeckkappe 4 für Strahlung im Infrarot Bereich durchlässig. Für Strahlung einer anderen Wellenlänge ist die Abdeckkappe 4 höchstens teildurchlässig, oder sogar vorzugsweise annähernd vollständig undurchlässig.

Die Figur 5 zeigt eine Schnittansicht des Strahlungssensors 1 gemäß Figur 3 entlang der Schnittlinie A - A'. Der Strahlungssensor 1 ist in dieser Ausführungsform mit einer Abdeckkappe 4 dargestellt, die in Figur 3 nicht dargestellt ist. Der Strahlungssensor 1 weist einen vorzugsweise gekrümmten Reflektor 3 auf. Der Reflektor 3 weist Bereiche auf, die den Fotodetektoren 2 zugewandt sind und die Strahlung in Richtung der Fotodetektoren 2 reflektieren. Der Reflektor kann auch gerade Flächen und Kanten aufweisen. Es ist jede Form des Reflektors möglich, die zur gewünschten Charakteristik führt.

In Figur 6 ist eine Seitenansicht des Strahlungssensors 1 gemäß Figur 3 entlang der Schnittachse B - B' gezeigt. Der Strahlungssensor 1 ist in dieser Ausführungsform, wie in Figur 5 mit einer Abdeckkappe 4 dargestellt, die in Figur 3 nicht gezeigt ist. Der Strahlungssensor 1 weist einen vorzugsweise gekrümmten Reflektor 3 auf. Mittig in dem Reflektor 3 ist eine Halterung 5 angeordnet, an der wenigstens zwei Fotodetektoren 2 angeordnet sind. Der Bereich des Reflektors 3, der den Fotodetektoren 2 zugewandt ist, weist, wie in Figur 6 dargestellt, eine schräge Fläche auf. Der Reflektor 3 kann jedoch auch gekrümmt oder anderweitig gebogen sein oder auch Kanten aufweisen. Durch die Form des Reflektors 3 kann die Erfassung der Position gegeben durch Azimut und Elevationswinkel und die Intensität einer Strahlungsquelle beeinflusst werden. Der Reflektor 3 ist vorzugsweise derart ausgeführt, dass die von der Strahlungsquelle emittierte Strahlung aus bestimmten Richtungen am Reflektor 3 reflektiert wird und zu den strahlungsempfindlichen Oberflächen der Fotodetektoren 2 gelangt. Die Fotodetektoren 2 sind für Strahlung, die mit einem flachen Einfallswinkel auf den Strahlungssensor 1 trifft, vorzugsweise so angeordnet, dass ein Teil der strahlungsempfindlichen Oberfläche der Fotodetektoren 2 über den Rand des Reflektors 3 ragt. Dadurch kann die von einer Strahlungsquelle emittierte Strahlung bei einem flachen Einfallswinkel direkt auf die strahlungsempfindlichen Oberflächen der Fotodetektoren 2 treffen. In der gezeigten Ausführungsform ragen die Fotodetektoren 2 wenigstens mit der Hälfte der strahlungsempfindlichen Fläche über den Rand des Reflektors 3. Der Reflektor 3 kann jedoch auch vollständig unterhalb der Fotodetektoren 2 angeordnet sein.

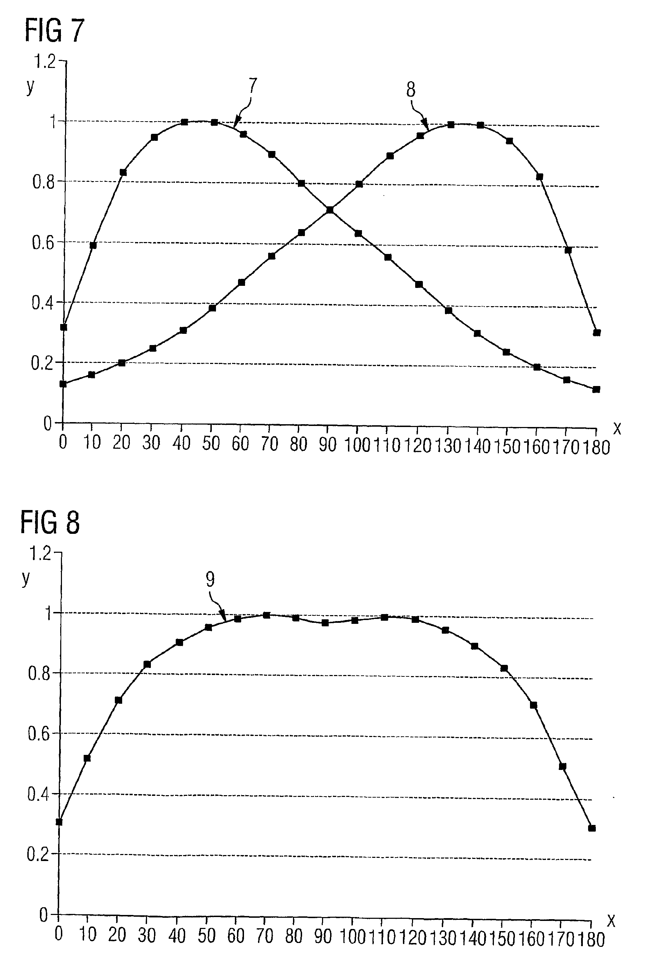

Die Figur 7 zeigt die jeweilige Abhängigkeit des Messsignals von zwei Fotodetektoren vom Einfallswinkel des auf die strahlungsempfindlichen Oberflächen der Fotodetektoren treffenden Strahlung, bezüglich des Horizonts des Strahlungssensors bei einem Azimutwinkel von -90 °, d.h. die Strahlungsquelle wandert von der linken Seite über den Sensor auf die rechte Seite. Für die Messkurven in den Figuren 7, 8 und 9 wurde ein Strahlungssensor verwendet, wie er in den Figuren 1 bis 6 beschrieben wurde. Es wurde eine Ausführungsform mit zwei Fotodetektoren verwendet, deren strahlungsempfindliche Oberflächen in einem Winkel von 45° zueinander angeordnet sind. Die Figur 7 zeigt beispielhaft den Verlauf des standardisierten Messsignals der beiden Fotodetektoren die an der y-Achse aufgetragen ist. Auf der x-Achse ist der Elevationswinkel der auf die beiden Fotodetektoren treffen Strahlung bezüglich des Horizonts des Strahlungssensors in Grad dargestellt. Dabei geben 0° und 180° eine Elevationswinkel an, bei dem die Strahlung von links bzw. von rechts auf den Strahlungssensors einfällt. Bei einem Winkel vom 90° trifft die Strahlung senkrecht auf den Strahlungssensor, hierbei trifft die Strahlung vorzugsweise vollständig durch Reflexion am Reflektor auf die Fotodetektoren. Der Azimutwinkel beträgt bei dieser Figur - 90°. Der Kurvenverlauf 7 eines ersten Fotodetektors, dargestellt durch eine Kurve mit Punkten, weist eine maximale Signalstärke von 100% bei einem Einfallswinkel von etwa 45° auf. Bei einem Elevationswinkel von 0° weist der Fotodetektor eine Signalstärke von etwa 30% auf. Zwischen einem Elevationswinkel von 0° und 45° steigt die Kurve 7 steil an. Zwischen 45° und 180° weist die Kurve 7 einen Verlauf auf, der annähernd linear ist. Bei einem Elevationswinkel von 180° weist die Signalstärke etwa 10% auf. Der Kurvenverlauf 8 eines zweiten Fotodetektors, dargestellt durch Kästchen, weist einen bei 90° Elevationswinkel spiegelsymmetrischen Verlauf auf. Die Kurve des zweiten Fotodetektors 8 hat bei einem Einfallswinkel von 0° Ihr absolutes Minimum von etwa 10% Signalstärke. Die Kurve 8 steigt bis zu einem Elevationswinkel von 135° annähernd linear auf ein Maximum von 100% an. Zwischen einem Elevationswinkel zwischen 135° und 180° fällt die Kurve 8 steil auf einen Wert von etwa 30% Signalstärke ab.

Die Figur 8 zeigt beispielhaft die Abhängigkeit der von zwei Fotodetektoren abgegebenen Signalstärke zum Einfallswinkel der auf die Fotodetektoren treffenden Strahlung, bezüglich des Horizonts des Strahlungssensors. Der Azimutwinkel beträgt bei dieser Figur -90°. Die y-Achse gibt die standardisierte Signalstärke an. Auf der x-Achse ist der Elevationswinkel der auf die beiden Fotodetektoren treffenden Strahlung bezüglich des Horizonts des Strahlungssensors in Grad dargestellt. Dabei geben 0° und 180° eine Elevationswinkel an, bei dem die Strahlung parallel zum Horizont des Strahlungssensors auf den Strahlungssensor trifft. Die Kurve 9 zeigt die Summe der Signale der beiden Fotodetektoren gemäß Figur 7. Die Kurve 9 weist bei einem Elevationswinkel von 0° und 180° jeweils ein absolutes Minimum von etwa 30% Signalstärke auf. Die Kurve 9 weist zwei lokale Maxima bei 70° und 110° Elevationswinkel mit 100% Signalstärke auf. Zwischen diesen beiden Maxima liegt ein lokales Minimum bei einem Elevationswinkel von 90° mit einer Signalstärke von etwa 98%.

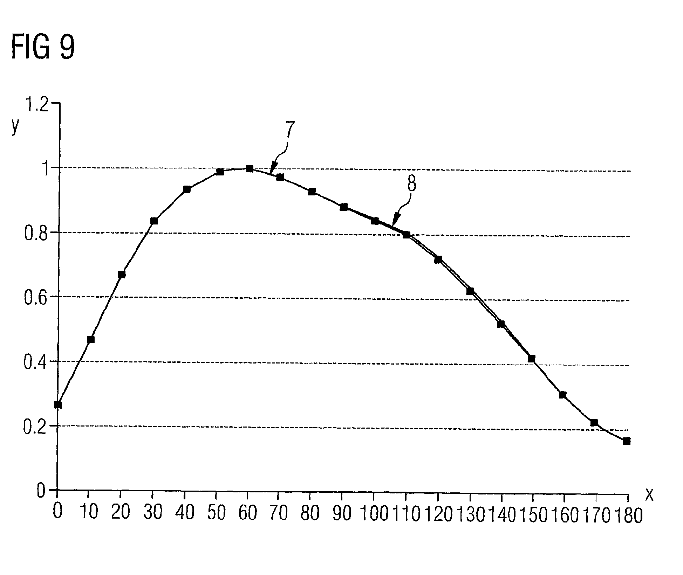

Die Figur 9 zeigt beispielhaft die Abhängigkeit der von zwei Fotodetektoren abgegebenen Signalstärke zum Elevationswinkel der auf die Fotodetektoren treffenden Strahlung, bezüglich des Horizonts des Strahlungssensors. Die y-Achse gibt die standardisierte Signalstärke an. Auf der x-Achse ist der Elevationswinkel der auf die beiden Fotodetektoren treffenden Strahlung bezüglich des Horizonts des Strahlungssensors in Grad dargestellt. Dabei geben 0° und 180° eine Elevationswinkel an, bei dem die Strahlung parallel zum Horizont des Strahlungssensors auf den Strahlungssensor trifft. Der Azimutwinkel beträgt bei dieser Figur 0°. Der Signalverlauf der Kurven 7 und 8 sind bei diesem Azimutwinkel von 0° nahezu identisch. Die Kurven 7 und 8 weisen bei einem Elevationswinkel von etwa 60° ihr Maximum auf. Die Signalstärke weist bei einem Elevationswinkel von 0° etwa 30% der Maximalstärke auf. Von 60° bis 110° fällt die Signalstärke von 100% langsam auf ca. 80% ab. Von einem Elevationswinkel zwischen 110° und 180° fällt die Signalstärke steiler auf einen Wert von etwa 18% bei 180° Elevationswinkel ab.

Durch die in den Figuren dargestellte Ausführungsform ist es möglich, einen Strahlungssensor mit einer möglichst geringen Bauhöhe anzugeben. Insbesondere ist durch den oben beschriebenen Aufbau, ein Strahlungssensor realisierbar, bei dem besonders die Abdeckkappe eine niedrige Bauhöhe aufweist.

Obwohl in den Ausführungsbeispielen nur eine beschränkte Anzahl möglicher Weiterbildung der Erfindung beschrieben werden konnte ist die Erfindung nicht auf diese beschränkt. Es ist prinzipiell möglich mehr als einen Fotodetektor zu verwenden, so dass es möglich ist, eine exaktere Position der Strahlungsquelle zu ermitteln.

Die Erfindung ist nicht auf die Anzahl der dargestellten Elemente beschränkt.

Die Beschreibung der hier angegebenen Gegenstände ist nicht auf die einzelnen speziellen Ausführungsformen beschränkt vielmehr können die Merkmale der einzelnen Ausführungsformen soweit technisch sinnvoll beliebig miteinander kombiniert werden.

### Bezugszeichenliste

- 1: Strahlungssensor
- 2: Fotodetektor
- 3: Reflektor
- 4: Abdeckkappe
- 5: Halterung
- 7: Signalverlauf des ersten Fotodetektors
- 8: Signalverlauf des zweiten Fotodetektors
- 9: Signalverlauf von zwei Fotodetektoren
- x: x-Achse
- y: y-Achse
- α: Winkel zwischen den Fotodetektoren 2

## Patentansprüche

1. Strahlungssensor (1) zum Erfassen der Position und Intensität einer Strahlungsquelle, aufweisend
- wenigstens einen Fotodetektor (2), der eine strahlungsempfindliche Oberfläche aufweist,
- einen Reflektor (3), der die von der Strahlungsquelle emittierte Strahlung aus bestimmten Richtungen zumindest teilweise in Richtung der strahlungsempfindlichen Oberfläche des Fotodetektors (2) reflektiert,
- wobei der Reflektor (3) auf der von einer Lichteinfallsseite abgewandten Seite des Strahlungssensors (1) angeordnet ist,
- wobei der Strahlungssensor (1) derart ausgebildet ist, dass sein Ausgangssignal von der Position der Strahlungsquelle abhängig ist und
- wobei der Fotodetektor (2) zumindest teilweise innerhalb eines vom Reflektor (3) bestimmten Innenraumes angeordnet ist, **dadurch gekennzeichnet dass**
- die strahlungsempfindliche Oberfläche des Fotodetektors annähernd senkrecht zum Horizont des Strahlungssensors angeordnet ist.

2. Strahlungssensor nach Anspruch 1, der mit einer Abdeckkappe (4) versehen ist.

3. Strahlungssensor nach Anspruch 2 bei dem die Abdeckkappe (4) für bestimmte Wellenlängen der von der Strahlungsquelle emittierten Strahlung wenigstens teilweise undurchlässig ist.

4. Strahlungssensor nach einem der Ansprüche 2 oder 3, bei dem die von der Strahlungsquelle emittierte Strahlung zumindest teilweise an der Abdeckkappe (4) durch Lichtbrechung beeinflusst wird.

5. Strahlungssensor nach einem der vorherigen Ansprüche, bei dem der Reflektor (3) als ein Teil eines Gehäuses oder eines Innenteils des Strahlungssensors (1) ausgebildet ist.

6. Strahlungssensor nach einem der vorherigen Ansprüche, bei dem eine Halterung (5) für den Fotodetektor (2) als ein Teil des Gehäuses des Strahlungssensors (1) ausgebildet ist.

7. Strahlungssensor nach einem der vorherigen Ansprüche, bei dem ein Signal, das von dem Fotodetektor (2) zur Erfassung der Intensität und Position der Strahlungsquelle ausgegeben wird, von der Form, dem Material oder von der Oberflächenbeschaffenheit des Reflektors (3) abhängig ist.

8. Strahlungssensor nach einem Ansprüche 1 bis 6, bei dem ein Signal, das von dem Fotodetektor (2) zur Erfassung der Intensität und Position der Strahlungsquelle ausgegeben wird, von der Form, dem Material und von der Oberflächenbeschaffenheit des Reflektors (3) abhängig ist.

9. Strahlungssensor nach einem der vorherigen Ansprüche, bei dem das Signal des Fotodetektors (2) zur Erfassung der Intensität und Position der Strahlungsquelle von dem Abstand des Reflektors (3) zu der strahlungsempfindlichen Oberfläche des Fotodetektors (2) abhängig ist.

10. Strahlungssensor nach einem der vorherigen Ansprüche, bei dem der Fotodetektor (2) wenigstens eine Vorrichtung aufweist, die die aus bestimmten Richtungen auf die strahlungsempfindliche Oberflächen der Fotodetektoren (3) einfallende Strahlungsmenge beeinflusst.

11. Strahlungssensor nach Anspruch 10, bei dem die Vorrichtung in Form von zusätzlichen Bau- oder Gehäuseteilen innerhalb des Strahlungssensors (1) ausgeführt ist.

12. Strahlungssensor nach Anspruch 10, bei dem die Vorrichtung in Form einer Schicht zur Absorption der einfallenden Strahlung auf die strahlungsempfindliche Oberfläche des Fotodetektors (2) ausgeführt ist.

13. Strahlungssensor nach Anspruch 10, bei dem die Vorrichtung die strahlungsempfindlichen Oberflächen des Fotodetektors (2) vor direkter oder indirekter Strahlung aus wenigstens einer bestimmten Richtung schützt.

14. Strahlungssensor nach einem der vorherigen Ansprüche, bei dem der Reflektor (3) im Bereich der den lichtempfindlichen Oberflächen der Fotodetektoren (2) gegenüberliegt eine gleichmäßige Oberfläche aufweist.

15. Strahlungssensor nach einem der vorherigen Ansprüche, wobei die strahlungsempfindlichen Oberflächen von zwei Fotodetektoren (2) in einem Winkel (α) von 45° zueinander angeordnet sind.

## Claims

1. Radiation sensor (1) for detecting the position and intensity of a radiation source, comprising
- at least one photodetector (2) having a radiation-sensitive surface,
- a reflector (3), which reflects the radiation emitted by the radiation source from specific directions at least partly in the direction of the radiation-sensitive surface of the photodetector (2),
- wherein the reflector (3) is arranged on that side of the radiation sensor (1) which is remote from a light incidence side,
- wherein the radiation sensor (1) is embodied in such a way that its output signal is dependent on the position of the radiation source, and
- wherein the photodetector (2) is arranged at least partly within an interior determined by the reflector (3), **characterized in that**
- the radiation-sensitive surface of the photodetector is arranged approximately perpendicularly to the horizon of the radiation sensor.

2. Radiation sensor according to Claim 1, which is provided with a covering cap (4).

3. Radiation sensor according to Claim 2, wherein the covering cap (4) is at least partly non-transparent to specific wavelengths of the radiation emitted by the radiation source.

4. Radiation sensor according to either of Claims 2 and 3, wherein the radiation emitted by the radiation source is at least partly influenced at the covering cap (4) by light refraction.

5. Radiation sensor according to any of the preceding claims, wherein the reflector (3) is embodied as a part of a housing or of an inner part of the radiation sensor (1).

6. Radiation sensor according to any of the preceding claims, wherein a mount (5) for the photodetector (2) is embodied as a part of the housing of the radiation sensor (1).

7. Radiation sensor according to any of the preceding claims, wherein a signal output by the photodetector (2) for detecting the intensity and position of the radiation source is dependent on the shape, the material or on the surface constitution of the reflector (3).

8. Radiation sensor according to any of Claims 1 to 6, wherein a signal output by the photodetector (2) for detecting the intensity and position of the radiation source is dependent on the shape, the material and on the surface constitution of the reflector (3).

9. Radiation sensor according to any of the preceding claims, wherein the signal of the photodetector (2) for detecting the intensity and position of the radiation source is dependent on the distance between the reflector (3) and the radiation-sensitive surface of the photodetector (2).

10. Radiation sensor according to any of the preceding claims, wherein the photodetector (2) comprises at least one device which influences the quantity of radiation incident on the radiation-sensitive surfaces of the photodetectors (2) from specific directions.

11. Radiation sensor according to Claim 10, wherein the device is embodied in the form of additional components or housing parts within the radiation sensor (1).

12. Radiation sensor according to Claim 10, wherein the device is embodied in the form of a layer on the radiation-sensitive surface of the photodetector (2) for absorbing the incident radiation.

13. Radiation sensor according to Claim 10, wherein the device protects the radiation-sensitive surfaces of the photodetector (2) from direct or indirect radiation from at least one specific direction.

14. Radiation sensor according to any of the preceding claims, wherein the reflector (3) has a uniform surface in the region lying opposite the light-sensitive surfaces of the photodetectors (2).

15. Radiation sensor according to any of the preceding claims, wherein the radiation-sensitive surfaces of two photodetectors (2) are arranged at an angle (α) of 45° with respect to one another.

## Revendications

1. Détecteur de rayonnement (1) pour détecter la position et l'intensité d'une source de rayonnement, présentant
- au moins un détecteur photoélectrique (2) qui présente une surface sensible au rayonnement,
- un réflecteur (3) qui réfléchit le rayonnement émis par la source de rayonnement depuis certaines directions au moins partiellement en direction de la surface sensible au rayonnement du détecteur photoélectrique (2),
- le réflecteur (3) étant disposé sur le côté du détecteur de rayonnement (1) à l'opposé d'un côté d'incidence de la lumière,
- le détecteur de rayonnement (1) étant configuré de telle sorte que son signal de sortie est dépendant de la position de la source de rayonnement et
- le détecteur photoélectrique (2) étant disposé au moins partiellement à l'intérieur d'un espace intérieur défini par le réflecteur (3),
**caractérisé en ce que**
- la surface sensible au rayonnement du détecteur photoélectrique est disposée quasi-perpendiculairement à l'horizon du détecteur de rayonnement.

2. Détecteur de rayonnement selon la revendication 1, lequel est muni d'un capuchon de protection (4).

3. Détecteur de rayonnement selon la revendication 2, avec lequel le capuchon de protection (4) est au moins partiellement opaque pour certaines longueurs d'onde du rayonnement émis par la source de rayonnement.

4. Détecteur de rayonnement selon l'une des revendications 2 ou 3, avec lequel le rayonnement émis par la source de rayonnement est influencé au moins partiellement au niveau du capuchon de protection (4) par réfringence.

5. Détecteur de rayonnement selon l'une des revendications précédentes, avec lequel le réflecteur (3) est réalisé sous la forme d'une partie d'un boîtier ou d'une partie intérieure du détecteur de rayonnement (1).

6. Détecteur de rayonnement selon l'une des revendications précédentes, avec lequel un support (5) pour le détecteur photoélectrique (2) est réalisé sous la forme d'une partie du boîtier du détecteur de rayonnement (1).

7. Détecteur de rayonnement selon l'une des revendications précédentes, avec lequel un signal qui est délivré par le détecteur photoélectrique (2) en vue de détecter l'intensité et la position de la source de rayonnement est dépendant de la forme, de la matière ou de la nature de la surface du réflecteur (3).

8. Détecteur de rayonnement selon l'une des revendications 1 à 6, avec lequel un signal qui est délivré par le détecteur photoélectrique (2) en vue de détecter l'intensité et la position de la source de rayonnement est dépendant de la forme, de la matière et de la nature de la surface du réflecteur (3).

9. Détecteur de rayonnement selon l'une des revendications précédentes, avec lequel le signal du détecteur photoélectrique (2) en vue de détecter l'intensité et la position de la source de rayonnement est dépendant de la distance du réflecteur (3) de la surface sensible au rayonnement du détecteur photoélectrique (2).

10. Détecteur de rayonnement selon l'une des revendications précédentes, avec lequel le détecteur photoélectrique (2) présente au moins un dispositif qui influence la quantité de rayonnement qui vient frapper les surfaces sensibles au rayonnement des détecteurs photoélectriques (2) depuis certaines directions.

11. Détecteur de rayonnement selon la revendication 10, avec lequel le dispositif est réalisé par en outre de composants ou de parties de boîtier supplémentaires à l'intérieur du détecteur de rayonnement (1).

12. Détecteur de rayonnement selon la revendication 10, avec lequel le dispositif est réalisé sous la forme d'une couche pour l'absorption du rayonnement incident sur la surface sensible au rayonnement du détecteur photoélectrique (2).

13. Détecteur de rayonnement selon la revendication 10, avec lequel le dispositif protège les surfaces sensibles au rayonnement du détecteur photoélectrique (2) contre un rayonnement direct ou indirect depuis au moins une certaine direction.

14. Détecteur de rayonnement selon l'une des revendications précédentes, avec lequel le réflecteur (3) présente une surface régulière dans la zone qui se trouve à l'opposé des surfaces sensibles au rayonnement des détecteurs photoélectriques (2).

15. Détecteur de rayonnement selon l'une des revendications précédentes, avec lequel les surfaces sensibles au rayonnement de deux détecteurs photoélectriques (2) sont disposées selon un angle (α) de 45° l'une par rapport à l'autre.
